# EUROPEAN PATENT APPLICATION

(11) **EP 2 204 759 A2**
(43) Date of publication of application: **07.07.2010**
(21) Application number: 09175326.9
(22) Date of filing: 06.11.2009
(51) Int. Cl.: G06K 7/00, H04B 1/38, G06K 19/07

(54) **Card reader and mobile payment terminal**

(30) Priority: 29.12.2008 CN 200820235762 U
(71) Applicant: Shenzhen Netcom Electronics Co., Ltd., High Tech Park Shenzhen (CN)
(72) Inventor: Yang, Tianzhu, Shenzhen (CN); Li, Zhixiong, Shenzhen (CN)
(74) Representative: MERH-IP Matias Erny Reichl Hoffmann

(57) **Abstract**

The present invention discloses a card reader (31) and a mobile payment terminal. The card reader (31) comprises an NFC antenna (311) connected to a dual interface smart stage card (32) for performing data interchange between a contactless card reading terminal and the dual interface smart stage card (32); an MCU (312) connected to the dual interface smart stage card (32) for reading data from the dual interface smart stage card (32) or writing data in the dual interface smart stage card (32); and a data interface unit (313) connected to the MCU (312) for establishing communication between the MCU (312) and a communication terminal. In an embodiment of the present invention, by installing an NFC antenna (311), the dual interface smart stage card (32) in the card reader (31) can interchange data with a contactless card reading terminal wirelessly in a passive environment.

## Description

### TECHNICAL FIELD

The present invention relates to card readers and, more particularly to a card reader and a mobile payment terminal.

### BACKGROUND

At present, card readers in the market mainly includes a single chip microcomputer (hereinafter referred to as "SCM"), a universal serial bus (hereinafter referred to as "USB") interface, and a near field communication (hereinafter referred to as "NFC") antenna. The traditional card readers only can, through wired transmission, read data from a dual interface smart stage card (a storage card embedded with a contactless smart card) or write data in a dual interface smart stage card. Due to small volume of the dual interface smart stage card, an antenna device can't be applied in the card; therefore, a separate dual interface smart stage card can't interchange data with a contactless card reading terminal wirelessly.

### SUMMARY

For solving the above mentioned problems of the prior art, a card reader according to claim 1 and a mobile payment terminal according to claim 8 are proposed. Preferred embodiments of the invention are described by the dependent claims.

In accordance with an aspect of the present invention, a card reader, which renders a separate dual interface smart stage card to interchange data with a contactless card reading terminal wirelessly, is provided.

A card reader according to the present invention comprises an NFC antenna, a micro control unit (hereinafter referred to as "MCU") and a data interface unit (hereinafter referred to as "DIU"). The NFC antenna is connected to a dual interface smart stage card and is configured for performing data interchange between a contactless card reading terminal and the dual interface smart stage card. The MCU is connected to the dual interface smart stage card and is configured to read data from the dual interface smart stage card or write data in the dual interface smart stage card. The DIU is connected to the MCU and is configured to establish communication between the MCU and a communication terminal.

In accordance with another aspect of the present invention, a mobile payment terminal is provided and comprises a card reader and a dual interface smart stage card which is inserted and held in the card reader for storing data. The card reader comprises an NFC antenna, an MCU and a DIU. The NFC antenna is connected to the dual interface smart stage card and is configured for performing data interchange between a contactless card reading terminal and the dual interface smart stage card. The MCU is connected to the dual interface smart stage card and is configured to read data from the dual interface smart stage card or write data in the dual interface smart stage card. The DIU is connected to the MCU and is configured to establish communication between the MCU and a communication terminal.

Accordingly, by installing an NFC antenna in the card reader, the dual interface smart stage card inserted in the card reader can interchange data with a contactless card reading terminal wirelessly in a passive environment.

Other objects, advantages and novel features of the present invention will become more apparent from the following detailed description when taken in conjunction with the accompanying drawings.

### BRIEF DESCRIPTION OF THE DRAWINGS

FIG. 1 is a schematic view of definition of pins in a dual interface smart stage card in accordance with an embodiment of the present invention;

FIG. 2 is a structural, schematic view of an actual dual interface smart stage card in accordance with the embodiment of the present invention; and

FIG. 3 is a functional block diagram of a mobile payment terminal in accordance with the embodiment of the present invention.

### DETAILED DESCRIPTION OF THE PREFERRED EMBODIMENTS

Many aspects of the card reader and the mobile payment terminal can be better understood with reference to the following drawings. The components in the drawings are not necessarily to scale, the emphasis instead being placed upon clearly illustrating the principles of the present thermal interface material. Moreover, in the drawings, like reference numerals designate corresponding parts throughout the several views.

In an embodiment of the present invention, by installing an NFC antenna in the card reader, the dual interface smart stage card inserted in the card reader can interchange data with a contactless card reading terminal wirelessly in a passive environment.

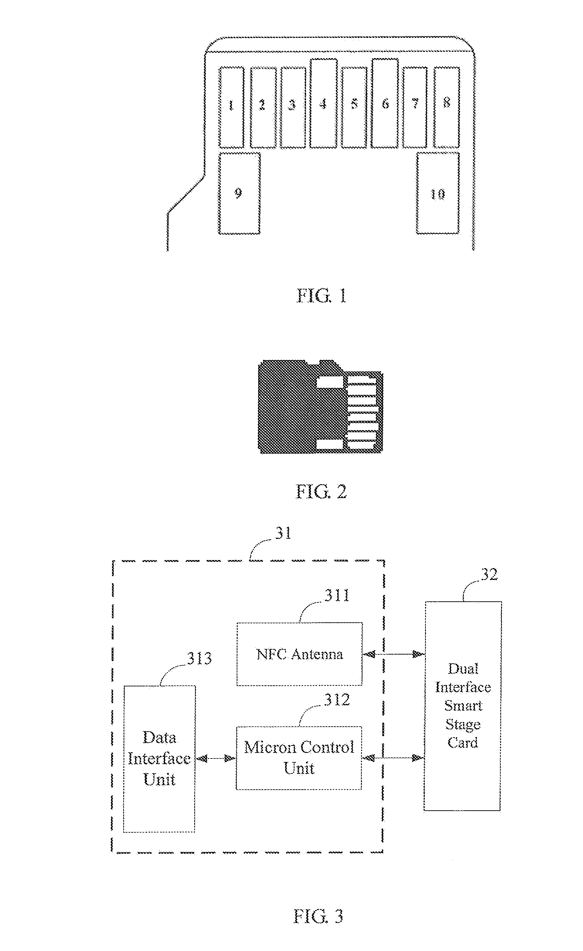

FIG. 1 shows the definition of pins in a dual interface smart stage card in accordance with an embodiment of the present invention. To facilitate description, only the parts related to the embodiment of the present invention are shown. The dual interface smart stage card has ten pins. The ten pins are designated as references numbers 1 to 10, as shown in FIG. 1. The ninth pin 9 and the tenth pin 10 are antenna contactless for antenna connection. In this embodiment, the dual interface smart stage card is a MicroSD embedded with a contactless smart card.

FIG. 2 shows an actual structure of the dual interface smart stage card, in accordance with the embodiment of the present invention. To facilitate description, only the parts related to the embodiment of the present invention are shown. In this embodiment, the dual interface smart stage card is a MicroSD embedded with a contactless smart card.

FIG. 3 shows a functional construction of a mobile payment terminal in accordance with the embodiment of the present invention. To facilitate description, only the parts related to the embodiment of the present invention are shown. The mobile payment terminal comprises a card reader 31 and a dual interface smart stage card 32.

The card reader 31 comprises an NFC antenna 311, an MCU 312, and a DIU 313.

Advantageously, the dual interface smart stage card 32 is a MicroSD embedded with a contactless smart card.

The NFC antenna 311 is configured for performing data interchange between the contactless card reading terminal and the dual interface smart stage card 32. The NFC antenna 311 can be connected to an antenna circuit of the dual interface smart stage card 32 through the antenna contacts of the dual interface smart stage card 32, i.e. the ninth pin 9 and the tenth pin 10 in this embodiment. The NFC antenna 311 is printed on a printed circuit board (PCB) of card reader 31, or alternatively, is a separate antenna coil independent of the PCB of card reader 31. The operation frequency band of NFC antenna 311 is advantageously about 13.56 MHz.

The MCU 312 is connected to the dual interface smart stage card 32 and is configured to read data from dual interface smart stage card 32 or write data in dual interface smart stage card 32. In this embodiment, MCU 312 is an SCM.

The DIU 313 is connected to the MCU 312 and, under the control of the MCU 312, interchanges data with a communication terminal provided with data interface unit corresponding to the DIU 313 through the DIU 313. In this embodiment, DIU 313 is a USB interface, and the communication terminal is a personal computer (PC).

The card reader 31 further comprises a socket for the dual interface smart stage card. The socket is connected to the PCB of the card reader 31 and is configured to hold the dual interface smart stage card.

The exemplary working process of the mobile payment terminal is described as follows: the user inserts the dual interface smart stage card 32 in the card reader 31; the mobile payment terminal is connected to the PC through the DIU 313 and the mobile payment terminal serve as a standard USB mass storage device (MSD) on the PC. The application program on the PC communicates with the MCU 312 of the mobile payment terminal through instructions in small computer system interface (SCSI) for wired access to the dual interface smart stage card 32 to charge the dual interface smart stage card 32, etc., thereby eliminating the need to charge traditional transportation cards on specific chargers.

The dual interface smart stage card 32 is inserted and held in the card reader 31 to form a mobile payment terminal. The dual interface smart stage card 32 is electrically connected to the NFC antenna 311 installed in the card reader 31. In a passive environment, the mobile payment terminal is disposed near the contactless card reading terminal, and the coupling of electric field in the NFC antenna 311 obtains the working power of the dual interface smart stage card 32. The NFC antenna 311 interchanges data with the contactless card reading terminal to realize contactless mobile payment.

In the embodiment of the present invention, by installing an NFC antenna in the card reader, the dual interface smart stage card in the card reader can interchange data with a contactless card reading terminal wirelessly in a passive environment, and the card reader can also interact with a storage card through wired transmission through instructions.

It is believed that the present embodiments and their advantages will be understood from the foregoing description, and it will be apparent that various changes may be made thereto without departing from the spirit and scope of the invention or sacrificing all of its material advantages, the examples hereinbefore described merely being preferred or exemplary embodiments of the invention.

## Claims

1. A card reader comprising:
an NFC antenna (311) connected to a dual interface smart stage card (32), for performing data interchange between a contactless card reading terminal and the dual interface smart stage card (32);
a micro control unit (312) connected to the dual interface smart stage card (32), for reading data from the dual interface smart stage card (32) or writing data in the dual interface smart stage card (32); and
a data interface unit (313) connected to the micro control unit (312), for establishing communication between the micro control unit (312) and a communication terminal.

2. The card reader of claim 1, wherein the NFC antenna (311) is connected to an antenna circuit of the dual interface smart stage card (32) through an antenna contact of the dual interface smart stage card (32).

3. The card reader of claim 1 or 2, wherein the NFC antenna (311) is printed on a printed circuit board of the card reader (31).

4. The card reader of claim 1 or 2, wherein the NFC antenna (311) is a separate antenna coil independent of a printed circuit board of the card reader (31).

5. The card reader of at least one of claims 1-4, wherein the micro control unit (312) is a single chip microcomputer.

6. The card reader of at least one of claims 1-5, wherein the data interface unit (313) is a universal serial bus interface (USB).

7. The card reader of at least one of claims 1-6, further comprising a socket for the dual interface smart stage card (32), the socket being connected to a printed circuit board of the card reader (31) for holding the dual interface smart stage card (32).

8. A mobile payment terminal comprising:
a card reader (31); wherein the card reader (31) is configured to receive a dual interface smart stage card (32) which is configured to store data;
and
the card reader (31) comprising:
an NFC antenna (311) connected to the dual interface smart stage card (32), for performing data interchange between a contactless card reading terminal and the dual interface smart stage card (32);
a micro control unit (312) connected to the dual interface smart stage card (32), for reading data from the dual interface smart stage card (32) or writing data in the dual interface smart stage card (32); and
a data interface unit (313) connected to the micro control unit (312), for establishing communication between the micro control unit (312) and a communication terminal.

9. The mobile payment terminal of claim 8, wherein the NFC antenna (311) is connected to an antenna circuit of the dual interface smart stage card (32) through an antenna contact of the dual interface smart stage card (32).

10. The mobile payment terminal of claim 8 or 9, wherein the NFC antenna (311) is printed on a printed circuit board of the card reader (31).

11. The mobile payment terminal of claim 8 or 9, wherein the NFC antenna (311) is a separate antenna coil independent of a printed circuit board of the card reader (31).

12. The mobile payment terminal of at least one claims 8-11, wherein the micro control unit (312) is a single chip microcomputer.

13. The mobile payment terminal of at least one of claims 8-12, wherein the data interface unit (313) is a universal serial bus interface (USB).

14. The mobile payment terminal of at least one of claims 8-13, further comprising a socket for the dual interface smart stage card (32), the socket being connected to a printed circuit board of the card reader (31) for holding the dual interface smart stage card (32).
